# FASCICULE DE BREVET EUROPEEN

(11) **EP 0 455 539 B1**
(45) Date de publication et mention de la délivrance du brevet: **10.01.1996**
(21) Numéro de dépôt: 91401073.1
(22) Date de dépôt: 23.04.1991
(51) Int. Cl.: G11B 7/00

(54) **Système d'enregistrement optique, de données sur disque, et procédés de lecture et écriture correspondants**
System für optische Aufnahme von Daten auf Scheiben und entsprechende Verfahren zum Lesen und Schreiben
System for optical recording of data on disks and corresponding methods of reading and writing

(30) Priorité: 02.05.1990 FR 9005538
(43) Date de publication de la demande: 06.11.1991
(73) Titulaire: THOMSON-CSF, F-75008 Paris (FR)
(72) Inventeur: Maillot, Christian, F-92402 Courbevoie Cédex (FR); Huignard, Jean-Pierre, F-92402 Courbevoie Cédex (FR); Lehureau, Jean-Claude, F-92402 Courbevoie Cédex (FR); Meunier, Paul-Louis, F-92402 Courbevoie Cédex (FR); Puech, Claude, F-92402 Courbevoie Cédex (FR)
(74) Mandataire: Guérin, Michel

(56) Documents cités:
- GB-A- 1 138 128
- US-A- 3 987 421
- Applied Optics vol. 14, no. 3, mars 1975, pp. 593-601; B.L. Booth: "Photopolymer Material for Holography"
- ELECTRONICS, vol. 61, no. 18, décembre 1988, New York, US, pp. 92-93; "Photorefractive memory gets new life"

## Description

L'invention concerne un nouveau système d'enregistrement de données par stockage d'informations numériques sous forme optique.

Dans les technologies de stockage optique numérique de l'information, la densité maximale stockable est limitée par la diffraction à la longueur d'onde de l'écriture ou de la lecture. Pour les longueurs d'onde optiques disponibles commercialement sous forme de diodes laser, on peut situer à titre d'exemple cette limite de densité aux alentours du bit par micromètre carré. En dessous, la lumière laser est diffractée par la structure moléculaire du matériau dans lequel est gravé l'enregistrement, et on n'arrive plus à distinguer des points élémentaires adjacents.

Pour augmenter la densité d'information numérique stockable dans un disque, c'est-à-dire pour augmenter la quantité d'informations stockées sans augmenter la surface du disque ou pour réduire la surface du disque sans réduire la quantité d'informations, on a déjà proposé d'utiliser un empilement de couches photosensibles réagissant à des longueurs d'onde différentes (à la manière de couches photographiques superposées): des informations sont stockées dans chaque couche, et ne sont lisibles chacune que par un laser spécifique de longueur d'onde bien déterminée différente des longueurs d'onde servant à lire les informations stockées dans les autres couches. Les pics d'absorption des différentes couches doivent être à des longueurs d'onde bien séparées les unes des autres pour permettre la discrimination entre les informations. Les couches supérieures doivent être transparentes aux longueurs d'onde de sensibilité des couches inférieures. La difficulté consiste donc à trouver pour les différentes couches des matériaux ayant les propriétés voulues en sélectivité spectrale, en sensibilité (pour l'écriture), en transparence, et en durée de rétention de l'information.

On a également proposé, dans le brevet US 3987421, de stocker plusieurs informations dans une même zone en utilisant des réseaux diffractants superficiels, plusieurs réseaux diffractant à des fréquences différentes étant mélangés à la surface d'une même zone.

L'invention propose une solution originale, telle que définie dans les revendications indépendantes 1, 14 et 15, pour multiplier la quantité d'informations numériques disponible par unité de surface, cette solution faisant appel à un principe qui est différent de la superposition de couches.

Dans cette solution on utilise une couche de matériau transparent dans l'épaisseur de laquelle peuvent être formés des réseaux optiques diffractants; dans chaque zone élémentaire de la couche sont mélangés plusieurs réseaux diffractants différents, l'information numérique étant définie par la présence ou l'absence, dans une zone élémentaire déterminée, d'un réseau diffractant à une longueur d'onde déterminée, chaque réseau étant apte à diffracter sélectivement un rayonnement électromagnétique de longueur d'onde déterminée en diffractant peu ou pas les rayonnements à des longueurs d'onde fortement diffractées par les autres réseaux. Par zone élémentaire, on entend une zone de dimensions latérales juste suffisantes pour stocker un bit d'information numérique sous forme d'un réseau diffractant à franges parallèles à la surface. On doit comprendre par conséquent que l'invention propose de stocker dans cette même zone élémentaire de dimensions normalement adaptées au stockage d'un bit d'information, plusieurs bits représentés chacun par la présence ou l'absence d'un réseau diffractant à une longueur d'onde respective dans cette zone. Les réseaux sont intimement mélangés et se situent dans l'épaisseur de la couche, les franges étant essentiellement parallèles à la surface.

La couche est de préférence une couche de matériau transparent à variation d'indice de réfraction photoinduite; plusieurs bits d'information sont écrits dans une même zone élémentaire de la couche, sous forme de la présence ou l'absence de réseaux diffractants de pas différents, chaque bit correspondant à un réseau de pas déterminé différent du pas des autres bits.

Dans les systèmes classiques d'enregistrement optique, des bits d'information différents doivent être stockés dans des régions géographiques élémentaires différentes; l'invention propose un système original dans lequel plusieurs bits différents peuvent être inscrits au même emplacement. L'information correspondant aux différents bits est représentée par les pas des réseaux de diffraction superposés (mélangés) les uns aux autres dans une même région élémentaire.

Et de plus, du fait que les réseaux diffractants sont enregistrés "verticalement", c'est -à- dire avec des franges parallèles à la surface de la couche, on réduit au minimum les dimensions latérales de chaque zone élémentaire d'information, de sorte qu'on peut augmenter considérablement la densité d'information numérique stockée.

On comprend que si l'on peut superposer plusieurs réseaux différents dans une même zone et si l'on arrive à savoir quel est le pas de chacun des réseaux superposés présents dans cette zone, alors on augmente la densité de stockage par rapport à tous les systèmes classiques dans lesquels on ne peut stocker qu'un bit dans une région élémentaire.

Or un réseau diffractant à pas constant diffracte très sélectivement uniquement certaines longueurs d'onde lumineuses qui le traversent. On peut donc détecter, à l'aide de faisceaux de longueurs d'onde appropriées, la présence ou l'absence de réseaux diffractants de pas déterminés, même si plusieurs réseaux sont superposés au même point, à condition que les longueurs d'onde diffractées par chaque réseau soient bien différentes des longueurs d'onde diffractées par les autres réseaux.

On utilise donc comme support d'enregistrement une couche de matériau à variation d'indice photoinduite, c'est-à-dire un matériau dont l'indice de réfraction va varier localement et de manière permanente sous l'action d'une énergie photonique appliquée localement au matériau. Et on appliquera l'énergie de telle manière qu'on enregistre des modifications permanentes d'indice selon un motif en réseau diffractant, en franges parallèles à la surface de la couche, dans l'épaisseur de celle-ci.

Pour l'inscription d'un réseau, on utilisera de préférence un laser focalisé perpendiculairement à l'épaisseur de la couche, dans une petite région élémentaire de cette couche. Le plus simple est de composer le faisceau laser avec sa propre réflexion dans un miroir, pour produire des interférences dans la zone de composition des faisceaux (zone qu'on s'arrangera pour placer dans l'épaisseur de la couche d'enregistrement); la composition des faisceaux produit un réseau d'interférences à un pas géométrique lié directement à la longueur d'onde du laser (le pas est la longueur d'onde divisée par deux fois l'indice de réfraction du matériau). L'énergie lumineuse disponible dans les faisceaux composés est choisie suffisamment forte pour que le réseau d'interférences provoque une modification locale de l'indice de réfraction de la couche selon la répartition d'énergie lumineuse, c'est-à-dire selon le motif du réseau d'interférences. Il y a donc enregistrement permanent dans la couche d'un réseau optique de pas bien déterminé, lié à la longueur d'onde du laser, à la manière d'un hologramme, mais dans l'épaisseur de la couche.

Si on répète l'opération avec un laser de longueur d'onde différente, au même endroit, on peut inscrire un autre réseau d'interférences de pas différent. Plusieurs réseaux peuvent ainsi être superposés au même endroit; ce qui les distingue c'est leur pas respectif dans le sens de l'épaisseur, alors qu'on ne peut pas les distinguer par leur emplacement dans le plan de la couche puisqu'ils occupent la même région de couche.

Pour lire l'information il faudra donc pouvoir déterminer s'il existe dans une zone élémentaire déterminée un réseau de pas déterminé. Pour cela on utilise selon l'invention des lasers de lecture à la même fréquence que les lasers d'écriture (un laser accordable ou plusieurs lasers). Le passage du laser de lecture dans un réseau de diffraction qui a été inscrit dans la couche de matériau par un laser d'écriture de longueur d'onde déterminée provoque, si le faisceau de lecture est à la même longueur d'onde que le faisceau d'écriture, une diffraction générale du faisceau, et provoque en particulier une diffraction partielle vers l'arrière. Au contraire, lorsque le laser de lecture a une longueur d'onde différente de celle qui a servi à l'inscription du réseau, il traverse le réseau sans être diffracté. On peut ainsi détecter l'existence ou la non existence de cette diffraction, donc la présence ou l'absence d'un réseau à un pas déterminé. La sélectivité est forte, d'autant plus que le nombre de périodes spatiales du réseau diffractant est élevé.

Le disque selon l'invention, stockant les informations numériques sous forme optique, comprend donc une couche de matériau à variation d'indice de réfraction photoinduite, et plusieurs réseaux diffractants mélangés, dans l'épaisseur de la couche, dans chaque zone élémentaire de stockage d'information.

Le procédé de lecture selon l'invention s'exprime de manière générale par le fait :
- qu'on sélectionne un laser de lecture de fréquence déterminée parmi plusieurs fréquences possibles,
- et qu'on détecte dans chaque zone élémentaire d'une couche superficielle du disque la présence d'un motif physique diffractant pour cette fréquence et non diffractant pour les autres fréquences. Les motifs diffractants sont constitués par des variations spatiales périodiques de l'indice optique, à l'intérieur de chaque zone élémentaire, dans le sens de l'épaisseur de la couche, c'est-à-dire essentiellement perpendiculairement à la surface.

Le procédé peut consister :
- soit à choisir un laser de lecture de longueur d'onde bien déterminée et à lire les régions adjacentes successives uniquement pour y détecter les réseaux à un pas correspondant au laser choisi, puis changer éventuellement de longueur d'onde de lecture,
- soit à lire chaque zone avec plusieurs longueurs d'onde de lecture successives avant de passer à la zone suivante.

On peut envisager éventuellement, dans des cas particuliers, que le disque comporte deux ou plusieurs couches de matériau à variation d'indice photoinduites qui seraient sensibles, en écriture, à des gammes de longueur d'onde très différentes et qui seraient transparentes chacune aux longueurs d'onde de sensibilité des autres couches. Des réseaux superposés seront alors présents dans chaque couche. On pourrait ainsi augmenter encore la densité d'informations superposées en une même région superficielle du disque. On peut imaginer par exemple de superposer une information d'image et une information de son sur un même disque optique, l'information de son étant établie dans une couche inférieure lisible avec un laser de plus grande longueur d'onde donc de résolution plus faible que l'information d'image. Ces deux informations peuvent alors être lues simultanément ou quasi simultanément. Pour chaque couche on superpose plusieurs "pistes" de lecture qui se distinguent les unes de autres non pas par leur emplacement physique mais par les longueurs d'onde laser qui permettent de les lire.

D'autres caractéristiques et avantages de l'invention apparaîtront à la lecture de la description détaillée qui suit et qui est faite en référence aux dessins annexés dans lesquels :
- la figure 1 représente le principe général d'enregistrement optique selon l'invention
- la figure 2 représente un schéma de principe de la lecture de l'information enregistrée;
- la figure 3 représente la forme générale des courbes de sélectivité de la diffraction.

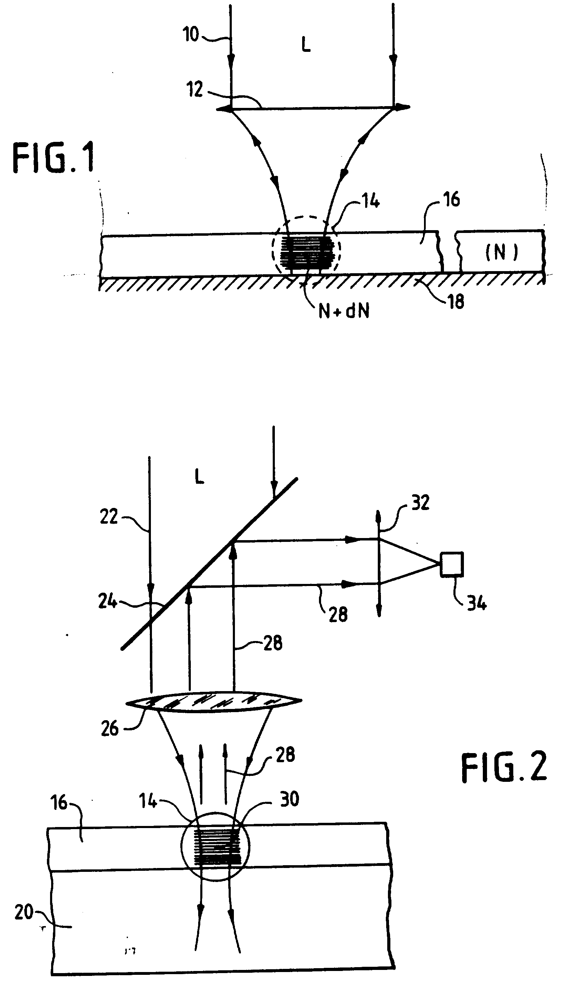

A la figure 1, on a représenté le principe général de l'invention : un faisceau laser 10 de longueur d'onde L est focalisé par des lentilles 12 sur une très petite zone de surface 14 d'une couche d'un matériau dont l'indice de réfraction N peut être modifié localement par l'énergie photonique dissipée localement dans la couche.

Pour des raisons de commodité de représentation, le dessin n'est pas à une échelle réaliste. A titre indicatif, l'épaisseur de la couche peut être de quelques dizaines de micromètres au moins ou même 100 à 200 micromètres; la surface de la zone 14, c'est-à-dire de la tache de focalisation du faisceau laser, peut être de l'ordre du micromètre carré; et la longueur d'onde L de l'ordre du micromètre ou moins (longueur d'onde visible). La distance entre le moyen de focalisation 12 et la surface de la couche est de quelques millimètres.

Le faisceau laser traverse donc la couche selon une sorte de tube cylindrique dont la hauteur est l'épaisseur de la couche et dont la section, de l'ordre du micromètre carré, représente une zone élémentaire de surface de disque dans laquelle on veut inscrire plusieurs informations binaires.

La couche est de préférence plane (déposée sur un disque support plan) pour qu'on puisse facilement balayer la surface par mise en rotation de celle-ci sous le faisceau laser.

Pour l'écriture d'informations dans le disque, on procède de la manière suivante : la couche est formée sur une surface réfléchissante 18 (réfléchissante pour la longueur d'onde L du laser). On peut prévoir par exemple que la couche était initialement déposée sur un disque transparent et que ce substrat est retourné pour mettre en contact la couche avec la surface réfléchissante d'un support qui n'est pas solidaire du disque; cela permet plus facilement de séparer le disque de la couche réfléchissante si cela est nécessaire. Mais on pourrait aussi prévoir que la couche est formée directement sur le support réfléchissant et qu'ultérieurement elle en sera séparée (par des moyens connus) si on le désire.

Le faisceau laser traverse la couche et se compose avec sa propre réflexion dans le miroir 18. Il en résulte des interférences à l'échelle de la longueur d'onde à l'intérieur de l'épaisseur même de la couche, ces interférences correspondant à des maxima et des minima d'énergie lumineuse, comme c'est bien connu dans la théorie ondulatoire de la lumière.

La couche 16 réagit à l'énergie apportée par le faisceau laser en modifiant localement son indice de réfraction d'autant plus que l'énergie apportée est plus élevée. L'indice de réfraction est donc modifié selon un motif correspondant à celui du réseau d'interférences : il y a des maxima et des minima de variations d'indice selon le même motif que les maxima et minima du réseau d'interférences. Ces variations d'indice sont permanentes. Elles sont symbolisées sur la figure 1 par un réseau de lignes d'indice modifié N+dN, mais dans la pratique le réseau est plus complexe qu'un simple réseau de lignes juxtaposées.

L'enregistrement est une sorte d'hologramme dans l'épaisseur de la couche 16.

Les matériaux qui conviennent pour la couche 16 sont justement des matériaux pour hologrammes. Des photopolymères appropriés sont décrits par Booth dans Applied Optics, vol 14 p 593, 1975 ou par Monroe, Smothers, Krebs, Mickish dans SPIE symposium on Hybrid Imaging Systems, Rochester, New-York, 1988. Des matériaux tels que le niobate de lithium, LiNbO₃, le germanate de bismuth Bi₁₂GeO₂₀ ou le silicate de bismuth Bi₁₂SiO₂₀ peuvent également convenir.

L'ordre de grandeur de la variation d'indice n'est pas élevé; il est par exemple au maximum de un pour cent (1%); mais c'est beaucoup plus que ce qui est nécessaire pour la lecture, comme on le verra plus loin, à condition que l'épaisseur de la couche soit suffisante pour qu'on puisse y loger un grand nombre de périodes spatiales du réseau d'interférences.

On applique en fait une énergie de faisceau laser beaucoup plus faible que celle qui est nécessaire pour produire cette variation de 1% de l'indice : on applique plutôt une énergie globale telle que les maxima des réseaux d'interférences provoquent des variations locales d'indice de l'ordre de 0,02%.

De cette manière, on ne sature pas la couche par un seul enregistrement de réseau d'interférences. Au contraire il reste une grande marge pour enregistrer au même endroit d'autres réseaux à l'aide de lasers de longueurs d'onde différentes. Avec des variations d'indice maximales de 0,02% pour chaque réseau, on peut enregistrer dans une même région élémentaire 14 plusieurs dizaines, voire une centaine, de réseaux différents sans saturer la couche.

En résumé, si la variation maximale possible de l'indice est de X% de l'indice initial, et si on veut pouvoir superposer K réseaux en un même endroit, il est nécessaire que chacun des réseaux corresponde individuellement à peu près à une variation d'indice de X/K %

L'opération d'écriture d'information représentée à la figure 1 est donc répétée avec différentes longueurs d'onde de laser en chaque point de la surface de la couche 16. On verra plus loin comment on choisit les longueurs d'onde : c'est un problème de discrimination lors de la lecture.

A titre indicatif, l'énergie d'inscription dans le photopolymère peut être de 100 millijoules par cm pour obtenir une variation d'indice de 0,02 %. Cette énergie correspond à 1 nanojoule pour 1 micromètre carré. La durée d'inscription pour un point peut être de 100 nanosecondes, la puissance laser nécessaire pour l'inscription étant alors de 10 milliwatts et pouvant être produite, compte tenu du rendement global du système optique, par un laser de 50 ou 100 milliwatts.

Pour la lecture, il est préférable (mais pas absolument indispensable) que la couche 16 ne repose plus sur une surface réfléchissante 18 mais plutôt sur un support transparent ou absorbant. De toutes façons, la lecture ne s'effectuera pas forcément sur la couche 16 proprement dite qui a été enregistrée, mais plutôt sur un disque obtenu par duplication d'hologramme, et ce disque réplique n'a pas de raison de comporter une couche réfléchissante.

La lecture d'une information binaire enregistrée à un point donné consiste à focaliser en ce point un faisceau laser de même longueur d'onde que celle qui a servi à l'inscription de l'information mais d'énergie plus faible. Ou bien une inscription a été faite et un réseau interférentiel de type holographique est inscrit sous forme d'un motif de variations d'indice optique du matériau, ou bien aucune inscription n'a été faite et il n'y a pas de réseau, ou tout au moins il n'y a pas de réseau correspondant à la même longueur d'onde d'inscription car il peut y en avoir à d'autres longueurs d'onde.

S'il y un motif, le faisceau laser est fortement diffracté car le pas du motif est celui des interférences créées par la même longueur d'onde. Une partie de la lumière diffractée est renvoyée en arrière (rétrodiffusion) et peut être détectée par un photodétecteur.

S'il n'y a pas de motif (correspondant à cette longueur d'onde), le faisceau laser traverse la couche sans diffraction et aucune lumière n'est rétrodiffusée. Ceci est vrai même s'il y a des motifs inscrits au même point et correspondant à d'autres longueurs d'onde : le faisceau laser traverse ces motifs sans diffraction et aucune lumière n'est rétrodiffusée.

La figure 2 représente le principe de cette lecture laser. Bien entendu, l'énergie du faisceau laser de lecture est beaucoup plus faible que celle du faisceau d'écriture pour ne pas induire de variation d'indice dans le matériau au cours de la lecture.

La couche 16 est sur un support 20 de préférence transparent (substrat d'un disque). Le faisceau laser de lecture 22, transmis à travers un miroir oblique semiréfléchissant 24 est focalisé par une optique 26 sur une petite zone 14 de la surface de la couche 16 et dans toute l'épaisseur de la couche sous cette surface. De la lumière 28 est éventuellement rétrodiffusée par la présence d'un réseau diffractant 30 dans la couche 16 si ce réseau a été inscrit à la même longueur d'onde que celle du laser de lecture 22. Cette lumière est renvoyée à travers l'optique 26 vers le miroir 24. Le miroir 24 la renvoie vers un système optique 32 qui la focalise sur un photodétecteur 34. Le photodétecteur fournit l'information binaire recherchée sur la présence ou l'absence, à un endroit donné, d'un réseau diffractant correspondant à la longueur d'onde du laser de lecture.

Le laser est accordable pour pouvoir lire le disque avec différentes longueurs d'onde correspondant aux différentes longueurs d'ondes d'écriture. Ou alors plusieurs lasers différents sont prévus et utilisés tour à tour.

Le déplacement du laser par rapport à la surface du disque, en lecture comme en écriture, est de type classique pour les supports d'enregistrement optique : le mieux est d'utiliser un disque plan de support de la couche 16 et de faire tourner le disque par rapport à un faisceau laser fixe orienté perpendiculairement à la surface du disque. La position du faisceau par rapport au disque est par exemple asservie d'une manière classique sur une piste gravée dans le disque.

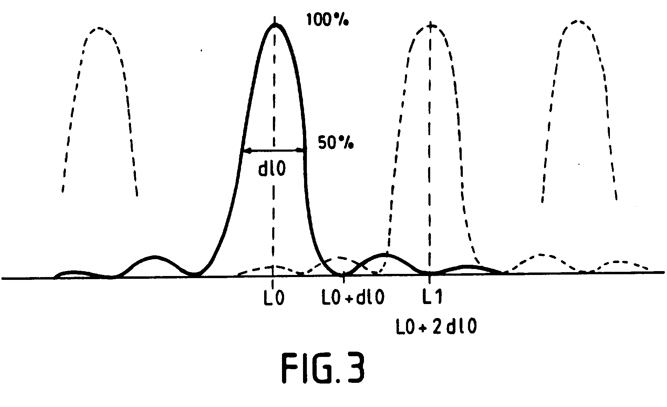

La figure 3 représente l'efficacité de diffraction d'un faisceau laser par un réseau diffractant créé dans la couche 16 par variation d'indice photoinduite. Cette efficacité est le rapport entre l'intensité de la lumière diffractée vers l'arrière et celle du faisceau incident. Même si cette efficacité est faible (une faible proportion du faisceau incident repart vers l'arrière et peut être recueillie vers le photodétecteur), elle est très sélective en fonction de la longueur d'onde et il y a un pic très accentué pour la longueur d'onde qui correspond justement à la longueur d'onde du laser d'écriture du réseau diffractant.

Comme on l'a représenté sur la figure 3, l'efficacité de diffraction en fonction de la longueur d'onde est une courbe du type (sinx/x), c'est-à-dire qu'elle présente un maximum très net à la longueur d'onde L et, de part et d'autre de ce maximum, une alternance de minima et maxima secondaires, ces derniers ayant des amplitudes beaucoup plus faibles que le pic principal.

La sélectivité spectrale peut s'exprimer par le rapport dl0/L0 entre l'écart de longueur d'onde dl0 à mi-hauteur (correspondant à une chute d'efficacité de 50%) et la longueur d'onde L0 au centre du pic principal.

L'efficacité présente des minima entre les pics de la courbe, et l'écart de longueur d'onde entre un maximum et un minimum est justement de l'ordre de dl0 pour une courbe en (sinx/x).

Pour permettre la discrimination entre plusieurs réseaux diffractants à des longueurs d'onde différentes, on doit décaler les longueurs d'onde correspondant aux différents réseaux d'une distance suffisante pour que les courbes d'efficacité correspondant à ces différentes longueurs d'onde ne se mélangent pas.

C'est ce que montre la figure 3 : il est préférable de centrer la deuxième longueur d'onde L1 à une distance 2dl0 de la première longueur d'onde L0, puis la troisième longueur d'onde 12 à une distance 2dl1 du pic central de la deuxième, etc.

Si la sélectivité spectrale est suffisante (dl0/L0 suffisamment faible), on peut discriminer un grand nombre de réseaux à des longueurs d'onde voisines les unes des autres, par exemple dans une gamme de longueurs d'onde de plus ou moins 10% ou 20% autour d'une longueur d'onde centrale. Au delà de cette gamme il faut faire attention que les réseaux peuvent diffracter des fréquences harmoniques des fréquences laser qui ont servi à l'inscription et il y a donc un risque de mauvaise interprétation d'une lecture.

A titre d'exemple, on peut envisager d'utiliser plusieurs dizaines de longueurs d'onde différentes dans une gamme de longueurs d'onde visibles allant de 0,73 micromètre à 0,87 micromètres, les longueurs d'onde étant séparées les unes des autres par des écart de l'ordre de 0,005 micromètre. Mais à condition que la sélectivité soit suffisante, c'est-à-dire que le dl0 de la courbe de la figure 3 soit inférieur à 0,002 ou 0,003 micromètre. On a alors un système d'enregistrement avec des réseaux superposés ayant des pas répartis par exemple entre une 0 valeur P-p1 et une valeur P+p2, p1 et p2 étant de l'ordre de 10 à 20% de P au maximum.

Pour obtenir la sélectivité voulue, il est nécessaire que les réseaux diffractants soient constitués sur un grand nombre de périodes spatiales. C'est la raison pour laquelle on effectue l'inscription des réseaux dans une épaisseur de couche importante, par exemple de l'ordre de 100 ou 150 micromètres : pour une lumière visible à 0,8 micromètre et un indice de réfraction d'environ 1,5, le pas des réseaux est d'environ 0,3 micromètre; on peut donc inscrire environ 300 à 500 pas de réseau dans une épaisseur de 100 à 150 micromètres. Ce nombre permet d'obtenir une efficacité et une sélectivité de diffraction très importantes.

On peut d'ailleurs calculer que la sélectivité spectrale dl0/L0 est égale à l'inverse du nombre de périodes spatiales du réseau diffractant, et par conséquent, pour un nombre de 500 et une longueur d'onde L0 d'environ 0,8 micromètre, on doit effectivement séparer les longueurs d'onde d'inscription par des intervalles d'au moins 2dl0, c'est-à-dire au moins 0,003 micromètre.

L'efficacité de diffraction au maximum de la courbe sélective peut aussi être calculée; c'est le rapport entre l'intensité de l'onde diffractée et l'intensité du faisceau incident; elle est proportionnelle au carré du nombre de périodes spatiales du réseau (d'où l'importance d'avoir une épaisseur suffisante) et au carré de la variation d'indice dN qui forme le réseau diffractant. On peut estimer qu'elle est de l'ordre de 1% ou quelques pour cent avec les ordres de grandeur donnés plus haut, et cela est suffisant pour permettre une détection de la présence d'un réseau diffractant.

En ce qui concerne l'aspect pratique de la lecture du disque optique, il faut noter qu'on utilisera un déplacement classique d'une tête de lecture au dessus de pistes qui contiennent les zones élémentaires successives contenant les données enregistrées. La tête de lecture comportera le faisceau laser et l'objectif de focalisation à grande ouverture qui concentre le faisceau sur une zone élémentaire très petite (1 micromètre carré). L'asservissement sur une piste déterminée se fera par exemple en gravant des sillons de guidage dans la surface du disque, exactement comme on le fait dans les disques vendus actuellement dans le grand public. Les sillons peuvent être situés sur le substrat du disque, sous la couche transparente à variation d'indice photoinduite.

En ce qui concerne le laser de lecture, on sait faire des lasers accordables : l'accord de fréquence peut se faire notamment par variation de la température de la cavité d'émission, et un accord plus fin peut se faire par variation du courant d'injection pour les diodes laser.

## Revendications

1. Système d'enregistrement optique d'informations numériques, comportant une couche (16) de matériau transparent dans laquelle peuvent être formés des réseaux optiques diffractants, l'information étant définie par la présence ou l'absence, dans une zone élémentaire (14) de la couche transparente, d'un réseau apte à diffracter sélectivement un rayonnement électromagnétique à une longueur d'onde déterminée en diffractant peu ou pas les rayonnements à des longueurs d'onde fortement diffractées par d'autres réseaux, caractérisé en ce que les réseaux diffractants sont constitués dans l'épaisseur de la couche transparente, des réseaux diffractant sélectivement des longueurs d'onde différentes étant mélangés dans l'épaisseur de la couche dans au moins une zone élémentaire (14) de la couche transparente.

2. Système d'enregistrement selon la revendication 1, caractérisé en ce que la couche est une couche de matériau à variation d'indice de réfraction photoinduite, dans laquelle sont inscrits, par modification locale d'indice de réfraction selon un motif diffractant en franges parallèles à la surface, les réseaux diffractants mélangés.

3. Système d'enregistrement selon la revendication 2, caractérisé en ce que la couche est constituée par un photopolymère apte à stocker des enregistrements de type holographique.

4. Système d'enregistrement selon l'une des revendications précédentes, caractérisé en ce que les motifs des différents réseaux diffractants ont des pas répartis entre une valeur P-pl et P+p2, où p1 et p2 sont de l'ordre de 10 à 20% de P environ, P étant une valeur de pas du réseau.

5. Système d'enregistrement selon l'une des revendications précédentes, caractérisé en ce que la longueur d'onde diffractée par un premier réseau diffère de la longueur d'onde la plus proche de la première, diffractée par un autre réseau, d'une valeur sensiblement égale à 2dl, où dl est l'écart entre la première longueur d'onde pour laquelle la diffraction par le premier réseau est maximale, et une longueur d'onde voisine pour laquelle la diffraction par le même premier réseau est minimale.

6. Système d'enregistrement selon l'une des revendications précédentes, caractérisé en ce que la variation d'indice photoinduite correspond, pour chaque réseau, à une variation locale d'indice inférieure à quelques pour cent de la variation maximale d'indice qui peut être provoquée dans le matériau.

7. Système d'enregistrement optique selon l'une des revendications précédentes, caractérisé en ce que l'épaisseur de la couche (16) est d'au moins quelques dizaines de micromètres.

8. Système d'enregistrement selon l'une des revendications précédentes, caractérisé en ce que la couche (16) est formée sur un disque plan (20).

9. Système d'enregistrement selon l'une des revendications précédentes, caractérisé en ce qu'il comporte un miroir (18) placé sous la couche, et un laser d'écriture (10) émettant un faisceau vers la couche et à travers elle, de manière que le faisceau se compose avec sa propre réflexion, à l'intérieur de l'épaisseur de la couche, et y établisse des motifs d'interférences dans lesquels les maxima d'énergie lumineuse sont suffisants pour établir dans la couche des variations locales d'indice permanentes.

10. Système selon la revendication 9, caractérisé en ce qu'il comporte des moyens (12) pour focaliser le faisceau laser (10) sur une petite zone élémentaire de la couche, cette zone ayant une surface de l'ordre du micromètre carré, et une profondeur de l'ordre de l'épaisseur de la couche.

11. Système selon l'une des revendications 9 et 10, caractérisé en ce que le laser est un laser accordable.

12. Système selon l'une des revendications précédentes, caractérisé en ce qu'il comporte un laser de lecture (22), un moyen (26) de focalisation du laser de lecture sur une petite zone élémentaire (14) de la couche, et un moyen de détection (34) d'un rayonnement éventuellement diffracté par la couche.

13. Système selon la revendication 12, caractérisé en ce qu'il comporte un miroir semiréfléchissant (24) à travers lequel est transmis le faisceau laser (22), le miroir servant à réfléchir un rayonnement diffracté vers l'arrière par la couche (16) pour diriger ce rayonnement vers un photodétecteur (34).

14. Procédé de lecture d'un disque optique, comprenant les opérations consistant à sélectionner une fréquence de laser de lecture déterminée parmi plusieurs fréquences possibles, détecter dans chaque zone élémentaire du disque la présence ou l'absence d'un motif physique qui est diffractant pour ladite fréquence et non diffractant pour les autres fréquences, caractérisé en ce que les réseaux diffractants sont constitués par variation locale de l'indice de réfraction à l'intérieur de ladite zone élémentaire, cette variation étant périodique dans une direction essentiellement perpendiculaire à la surface de la couche.

15. Procédé d'écriture d'informations sur un disque optique, caractérisé en ce que l'on inscrit dans l'épaisseur d'une couche superficielle du disque, réalisée en matériau à variation d'indice photoinduite, à un emplacement donné de la couche, plusieurs réseaux superposés de variations d'indice, chaque réseau étant produit par interférence d'un faisceau laser avec sa propre réflexion dans un miroir, et chaque réseau correspondant à une fréquence de laser respective différente des fréquences correspondant aux autres réseaux.

## Patentansprüche

1. System zur optischen Speicherung digitaler Informationen mit einer Schicht (16) aus einem transparenten Material, in dem optische Beugungsgitter erzeugt werden können, wobei die Information durch das Vorliegen oder Nichtvorliegen eines Beugungsgitters in einer Elementarzone (14) der transparenten Schicht definiert ist, das selektiv eine elektromagnetische Strahlung einer bestimmten Wellenlänge beugen kann, ohne durch Strahlungen anderer Wellenlängen wesentlich beeinflußt zu werden, die von anderen Netzen gebeugt werden, dadurch gekennzeichnet, daß die Beugungsgitter in der Dicke der transparenten Schicht ausgebildet sind und daß die Beugungsgitter, die selektiv für unterschiedliche Wellenlängen wirksam sind, in der Dicke der Schicht in mindestens einer Elementarzone (14) der transparenten Schicht gemischt sind.

2. Speichersystem nach Anspruch 1, dadurch gekennzeichnet, daß die Schicht aus einem Material mit einer durch Licht induzierten Veränderung des Brechungsindex besteht, wobei in diese Schicht die gemischten Beugungsgitter durch örtliche Veränderung des Brechungsindex gemäß einem Beugungsmuster mit zur Oberfläche parallelen Beugungslinien eingeschrieben werden.

3. Speichersystem nach Anspruch 2, dadurch gekennzeichnet, daß die Schicht aus einem Fotopolymer besteht, das holographische Bilder speichern kann.

4. Speichersystem nach einem der vorhergehenden Ansprüche, dadurch gekennzeichnet, daß die Muster der verschiedenen Beugungsgitter Abstände besitzen, die zwischen einem Wert P-pl und P+p2 verteilt sind, wobei p1 und p2 in der Größenordnung von 10 bis 20% von P liegen und P ein Gitterabstandswert ist.

5. Speichersystem nach einem der vorhergehenden Ansprüche, dadurch gekennzeichnet, daß die Wellenlänge des von einem ersten Gitter gebeugten Lichts von der der ersten am nächsten liegenden Wellenlänge sich um einen Wert unterscheidet, der im wesentlichen gleich 2dl ist, wobei dl der Abstand zwischen der ersten Wellenlänge, für die die Beugung durch das erste Gitter einen Maximalwert hat, und einer benachbarten Wellenlänge ist, für die die Beugung durch dasselbe erste Gitter einen Mindestwert hat.

6. Speichersystem nach einem der vorhergehenden Ansprüche, dadurch gekennzeichnet, daß die durch Licht induzierte Veränderung des Brechungsindex für jedes Gitter einer Veränderung des Brechungsindex entspricht, die unter einigen Prozent der maximalen Indexveränderung liegt, die in dem Material hervorgerufen werden kann.

7. Optisches Speichersystem nach einem der vorhergehenden Ansprüche, dadurch gekennzeichnet, daß die Dicke der Schicht (16) mindestens einige zehn µm beträgt.

8. Speichersystem nach einem der vorhergehenden Ansprüche, dadurch gekennzeichnet, daß die Schicht (16) auf einer ebenen Scheibe (20) gebildet ist.

9. Speichersystem nach einem der vorhergehenden Ansprüche, dadurch gekennzeichnet, daß es einen Spiegel (18) unter der Schicht sowie einen Schreiblaser (10) aufweist, der einen Strahl zur Schicht und durch sie hindurch schickt, so daß der Strahl sich mit seinem eigenen reflektierten Strahl im Inneren der Dicke der Schicht kombiniert und dort Interferenzmuster erzeugt, in denen die Maxima der Lichtenergie ausreichen, um in der Schicht bleibende örtliche Veränderungen des Brechungsindex hervorzurufen.

10. Speichersystem nach Anspruch 9, dadurch gekennzeichnet, daß es Mittel (12) zur Fokussierung des Laserstrahls (10) auf eine kleine Elementarzone der Schicht aufweist, wobei diese Zone eine Oberfläche von etwa 1 µm und eine Tiefe von etwa der Dicke der Schicht besitzt.

11. Speichersystem nach einem der Ansprüche 9 und 10, dadurch gekennzeichnet, daß der Laser ein abstimmbarer Laser ist.

12. Speichersystem nach einem der vorhergehenden Ansprüche, dadurch gekennzeichnet, daß er einen Leselaser (22), ein Mittel (26), um den Leselaser auf eine kleine Elementarzone (14) der Schicht zu fokussieren, und ein Mittel (34) zur Erfassung einer eventuell von der Schicht rückdiffundierten Strahlung enthält.

13. System nach Anspruch 12, dadurch gekennzeichnet, daß es einen halbreflektierenden Spiegel (24) besitzt, durch den der Laserstrahl (22) übertragen wird, wobei der Spiegel dazu dient, eine von der Schicht (16) rückdiffundierte Strahlung zu reflektieren und zu einem Fotodetektor (34) zu lenken.

14. Leseverfahren für eine optische Scheibe, bei dem eine bestimmte Lese-Laserfrequenz unter mehreren möglichen Frequenzen ausgewählt und in jeder Elementarzone der Scheibe das Vorliegen oder Nichtvorliegen eines physischen Musters erfaßt wird, das beugend für diese Frequenz und nicht-beugend für die anderen Frequenzen wirkt, dadurch gekennzeichnet, daß die Beugungsgitter aus einer örtlichen Veränderung des Brechungsindex im Inneren der Elementarzone gebildet werden, wobei diese Veränderung in einer Richtung im wesentlichen senkrecht zur Oberfläche der Schicht periodisch ist.

15. Verfahren zum Einschreiben von Informationen in eine optische Scheibe, dadurch gekennzeichnet, daß man in der Dicke einer oberflächlichen Schicht der Scheibe aus einem Material mittels durch Licht induzierter Veränderung des Brechungsindex an einer gegebenen Stelle der Schicht mehrere übereinanderliegende Netze von Indexvariationen realisiert, wobei jedes Netz durch Interferenz eines Laserstrahls mit seinem eigenen an einem Spiegel reflektierten Strahl erzeugt wird und jedes Netz einer entsprechenden Laserfrequenz entspricht, die sich von anderen Netzen entsprechenden Frequenzen unterscheidet.

## Claims

1. System for the optical recording of digital information, including a layer (16) of transparent material, in which diffraction optical gratings may be formed, the information being defined by the presence or absence, in an elementary zone (14) of the transparent layer, of a grating capable of selectively diffracting an electromagnetic radiation at a determined wavelength while diffracting scarcely or not at all the radiations at wavelengths which are strongly diffracted by other gratings, characterized in that the diffraction gratings are formed in the thickness of the transparent layer, gratings which selectively diffract different wavelengths being mixed within the thickness of the layer in at least one elementary zone (14) of the transparent layer.

2. Recording system according to Claim 1, characterized in that the layer is a layer of material with photo-induced variation in refractive index, in which the mixed diffraction gratings are recorded by local modification of refractive index according to a diffraction pattern of fringes parallel to the surface.

3. Recording system according to Claim 2, characterized in that the layer is constituted by a photopolymer capable of storing holographic type recordings.

4. Recording system according to one of the above claims, characterized in that the patterns of the different diffraction gratings have spacings distributed between a value P-p1 and P+p2, where p1 and p2 are of the order of 10 to 20% of P approximately, P being a grating spacing value.

5. Recording system according to one of the above claims, characterized in that the wavelength diffracted by a first grating differs from the wavelength closest to the first one, diffracted by another grating, by a value substantially equal to 2dl, where dl is the distance between the first wavelength for which the diffraction by the first grating is a maximum and a neighbouring wavelength for which the diffraction by the same grating is a minimum.

6. Recording system according to one of the above claims, characterized in that the photo-induced variation in index corresponds, for each grating, to a local variation in index that is smaller than a few per cent of the maximum variation in index that can be obtained in the material.

7. Optical recording system according to one of the above claims, characterized in that the thickness of the layer (16) is equal to at least a few tens of micrometres.

8. Recording system according to one of the above claims, characterized in that the layer (16) is formed on a plane disk (20).

9. Recording system according to one of the above claims, characterized in that it includes a mirror (18) placed beneath the layer, and a writing laser (10) that emits a beam towards the layer and through it, so that the beam combines with its own reflection, within the thickness of the layer, and therein sets up interference patterns in which the maxima of light energy are sufficient to set up permanent local variations in index in the layer.

10. System according to Claim 9, characterized in that it includes means (12) to focus the laser beam (10) on a small elementary zone of the layer, this zone having an area of the order of one square micrometre, and a depth of the order of the thickness of the layer.

11. System according to one of the Claims 9 and 10, characterized in that the laser is a tunable laser.

12. System according to one of the above claims, characterized in that it includes a reading laser (22), a means (26) for the focusing of the reading laser on a small elementary zone (14) of the layer, and a means (34) for the detection of a radiation that is possibly diffracted by the layer.

13. System according to Claim 12, characterized in that it includes a semi-reflecting mirror (24) through which the laser beam (22) is transmitted, the mirror being used to reflect a radiation diffracted backwards by the layer (16) to direct this radiation towards a photodetector (34).

14. Method for the reading of an optical disk, including the operations consisting in selecting a determined reading laser frequency from among several possible frequencies; detecting, in each elementary zone of the disk, the presence or absence of a physical pattern that is diffractive for the said frequency and not diffractive for the other frequencies, characterized in that the diffraction gratings are constituted by local variation of the refractive index within the said elementary zone, this variation being periodic in a direction essentially perpendicular to the surface of the layer.

15. Method for the writing of information on an optical disk, characterized in that several superimposed gratings of index variations are recorded in the thickness of a surface layer of the disk, made of a material with photo-induced index variation, at a given location of the layer, each grating being produced by the interference of a laser beam with its own reflection in a mirror, and each grating corresponding to a respective laser frequency different from the frequencies corresponding to the other gratings.
